# FASCICULE DE BREVET EUROPEEN

(11) **EP 1 647 694 B1**
(45) Date de publication et mention de la délivrance du brevet: **28.07.2010**
(21) Numéro de dépôt: 05292006.3
(22) Date de dépôt: 26.09.2005
(51) Int. Cl.: F02D 41/34, F02D 41/02, F02D 41/14, F02D 41/40

(54) **Procédé pour purger un piège à NOx avec contrôle de la richesse des gaz d'échappement**
Verfahren zum Regenerieren eines NOX-Speicherkatalysators mit Regelung des Lambdawerts des Abgases
Method for regenerating a NOX-trap with control of the lambda ratio of the exhaust gas

(30) Priorité: 15.10.2004 FR 0410985
(43) Date de publication de la demande: 19.04.2006
(73) Titulaire: Institut Français du Pétrole, 92852 Rueil Malmaison Cedex (FR); Peugeot Citroën Automobiles SA, 78140 Vélizy-Villacoublay (FR)
(72) Inventeur: Castagne, Michel, 92000 Nanterre (FR); Gindre, Sébastien, 78970 Mézières sur Seine (FR); Noirot, Rémi, 92800 Puteaux (FR)

(56) Documents cités:
- EP-A- 0 719 929
- EP-A- 0 802 315
- EP-A- 0 892 163
- EP-A- 1 143 131
- WO-A-02/095191
- DE-A1- 10 130 054
- DE-A1- 19 801 815

## Description

La présente invention se rapporte à un procédé pour purger un catalyseur dans lequel se sont accumulés des oxydes nitriques (NOx), appelé piège à NOx, avec un contrôle de la richesse des gaz d'échappement.
L'utilisation d'un piège à NOx placé dans une ligne d'échappement d'un moteur à combustion interne, notamment d'un moteur Diesel, permet de respecter les niveaux d'émissions de NOx afin de répondre à la sévèrisation des normes, telles que les normes dites EURO IV.

Ce piège à NOx, qui est généralement composé d'un support imprégné d'un métal précieux, comme un monolithe à base de mélanges d'oxydes imprégné de platine, permet d'oxyder les NO en NO₂ par le métal précieux puis d'adsorber ces NO₂ sur sa surface.
Ainsi, un tel piège permet de capturer et de stocker les NOx émis par le moteur lorsque ce moteur fonctionne avec un mélange pauvre (richesse inférieure à 1), c'est-à-dire avec un mélange carburé qui comporte un excès d'air. Pour assurer la continuité de l'activité de conversion de ce piège, il est nécessaire d'assurer sa purge bien avant que sa capacité de stockage en NO₂ ne soit saturée. Pour ce faire, il est habituel d'augmenter la température du piège et de le faire traverser par des gaz d'échappement ayant une composition globalement réductrice grâce à un mélange riche. De par l'élévation de température du piège et la présence d'éléments réducteurs contenus dans ce mélange riche, comme dans les oxydes de carbone (CO), les hydrocarbures imbrûlés (HC) et l'hydrogène (H₂) présents, les NO₂ adsorbés sur ce piège se transforment et sont ensuite déstockés du piège et évacués dans l'atmosphère par la ligne d'échappement du moteur.
Durant le fonctionnement du moteur, il est donc nécessaire de basculer les richesses des mélanges entre un mélange pauvre pour le piégeage des NOx et un mélange riche pour assurer la purge de ce piège.

Comme cela est connu en soi, le mélange riche est généralement obtenu par différentes opérations, seule ou en combinaison, comme la modification de la quantité d'air et/ou d'EGR (Exhaust Gas Recycling) admise dans la chambre de combustion du cylindre et/ou une injection supplémentaire de carburant, dite post-injection de carburant, dans cette chambre de combustion. Le but essentiel de ces opérations est de consommer l'oxygène présent dans les gaz d'échappement pour obtenir une richesse supérieure à 1, préférentiellement comprise entre 1,01 et 1,10, pour assurer la purge du piège.

Les demandeurs ont pu cependant constater que la mesure de richesse des gaz dans la ligne d'échappement juste en amont du piège à NOx, par l'intermédiaire d'une sonde comme décrit par exemple dans le document EP 1 143 131, n'est pas celle souhaitée.

De même, tel que mentionné dans le demande de brevet DE 101 30 054, la reconstruction de la richesse effective des gaz d'échappement de chaque cylindre à partir de la mesure unique de richesse dans la ligne d'échappement en amont du piège à NOx, ne permet pas d'obtenir la vraie valeur de richesse pour les cylindres concernés.

En effet, cette mesure unique de richesse dans la ligne d'échappement varie de plus ou moins 10 % autour de sa valeur moyenne. Cette variation provient essentiellement du déséquilibrage de combustion entre les cylindres du moteur. Ce phénomène perturbe la purge du piège dans le sens que celle-ci doit se réaliser avec un mélange riche, avec une richesse de préférence sensiblement égale à 1,02, qui n'est pas celle que voit ce piège. En effet, compte tenu des fluctuations de combustion dans les cylindres et pour lesquelles il peut y avoir des disparités de richesse à la sortie des cylindres, la richesse peut osciller, pour une valeur moyenne fixée par exemple à 1,02, de 0,92 à 1,12.

Dans ce cas, la purge totale du piège est plus longue, ce qui génère une surconsommation de carburant.

En outre, cette purge peut être incomplète dans le sens que, pendant la période correspondante à la purge du piège où le mélange doit être riche, le mélange est au contraire un mélange pauvre. Dans ce cas, il se produit une oxydation et un stockage des NOx sur ce piège au lieu d'une purge. Cela diminue à terme la performance de conversion du piège et nuit à son efficacité globale.

La présente invention se propose de remédier aux inconvénients énumérés ci-dessus grâce à un procédé et à un dispositif qui permettent d'obtenir une évaluation précise de la richesse d'échappement de manière à obtenir la richesse souhaitée pour la purge du piège.

A cet effet, la présente invention concerne un procédé pour purger un catalyseur de traitement des oxydes nitriques, dit piège à NOx, placé dans une ligne d'échappement d'un moteur multicylindres, notamment de type Diesel, et dans lequel se sont accumulés des oxydes nitriques, procédé dans lequel on génère des gaz d'échappement avec une richesse souhaitée supérieure à 1 dans ladite ligne d'échappement en amont dudit catalyseur et on fait traverser ce catalyseur par ces gaz pour réduire et déstocker les oxydes nitriques dudit catalyseur, caractérisé en ce qu'il consiste à :
- évaluer la richesse effective des gaz d'échappement issus de chaque cylindre par une mesure de ladite richesse ;
- en cas de dérive par rapport à la richesse souhaitée dans la ligne d'échappement, ajuster la richesse effective des gaz d'échappement issus de chaque cylindre à la richesse souhaitée dans ladite ligne d'échappement.

On peut ajuster la richesse effective des gaz d'échappement de chaque cylindre à la richesse souhaitée dans la ligne d'échappement par une post-injection de carburant.

Egalement, on peut ajuster la richesse effective des gaz d'échappement de chaque cylindre à la richesse souhaitée dans la ligne d'échappement par une recirculation contrôlée de gaz d'échappement pour chaque cylindre.

De manière avantageuse, la richesse souhaitée peut être de 1,01 à 1,10, préférentiellement de 1,02.

En outre, on peut surveiller la stabilité de combustion de chaque cylindre et, en cas d'écart par rapport à une valeur nominale, on peut ajuster cette stabilité à la valeur nominale.

On peut surveiller la stabilité de combustion de chaque cylindre en mesurant la pression régnant dans le cylindre.

On peut aussi surveiller la stabilité de combustion dans chaque cylindre par l'information angulaire délivrée par une cible asservie à la rotation du moteur.

On peut équilibrer la stabilité de combustion au moyen de l'avance à l'injection de carburant.

Les autres caractéristiques et avantages de l'invention vont apparaître à la lecture de la description qui va suivre, donnée à titre uniquement illustratif et non limitatif, et à laquelle sont annexées :
- la figure 1 qui est un schéma montrant un moteur à combustion interne avec sa ligne d'échappement comportant un piège à NOx et
- la figure 2 qui illustre une variante de la figure 1.

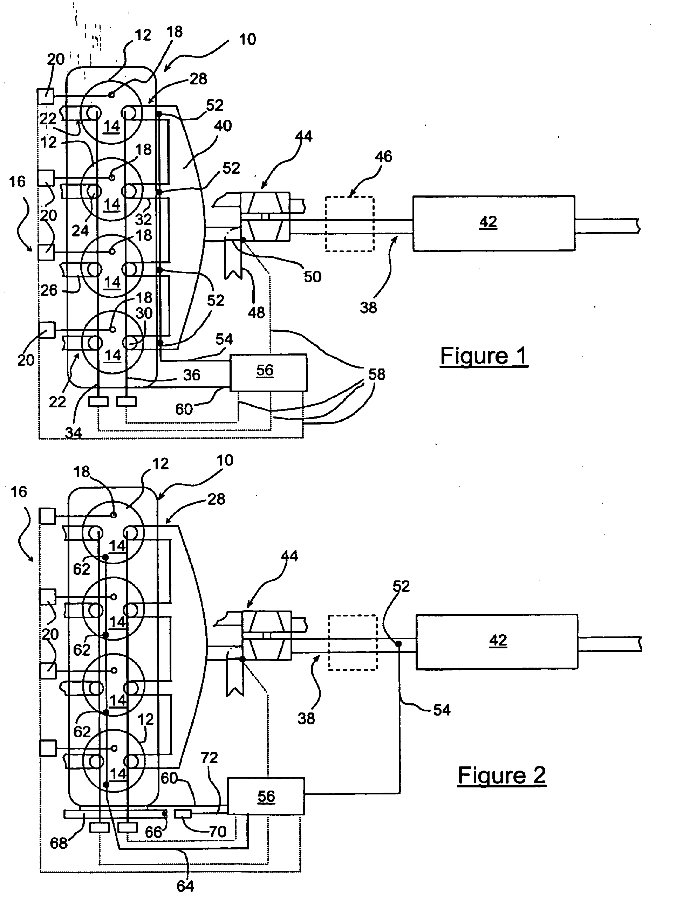

Sur la figure 1, un moteur à combustion interne 10, en particulier de type Diesel, comprend au moins un cylindre 12 avec une chambre de combustion 14 à l'intérieur de laquelle se produit la combustion d'un mélange carburé. Le cylindre comprend au moins un moyen d'alimentation en carburant sous pression 16, par exemple sous la forme d'un injecteur de carburant 18 contrôlé par tous moyens, comme une vanne 20, et qui débouche dans la chambre de combustion, au moins un moyen d'admission d'air 22 avec une soupape 24 associée à une tubulure d'admission 26 et au moins un moyen d'échappement des gaz brûlés 28 avec une soupape 30 et une tubulure d'échappement 32. Les soupapes d'admission 24 et d'échappement 30 sont commandées en ouverture et en fermeture par des moyens de commande respectivement 34 et 36, tels que des arbres à cames classiques ou des arbres à cames permettant de faire varier le phasage des lois de levée de ces soupapes et ce indépendamment les unes des autres ou de manière associée, comme ceux connus sous le sigle VVA (Variable Valve Actuation) ou VVT (Variable Valve Timing).
Les moyens d'échappement 28 de ce moteur sont connectés à une ligne d'échappement 38, de préférence par l'intermédiaire d'un collecteur d'échappement 40 reliant toutes les tubulures d'échappement 32 à cette ligne. Cette ligne d'échappement comprend, en aval des moyens d'échappement 28, un catalyseur 42 sur lequel s'accumulent les oxydes nitriques (NOx) présents dans les gaz d'échappement, ce catalyseur étant dénommé plus communément piège à NOx. De manière préférentielle, un dispositif de suralimentation 44, comme un turbocompresseur, est placé sur cette ligne d'échappement en aval du piège à NOx et permet de faire admettre un air d'admission sous pression dans les chambres de combustion 14. Egalement, il peut être prévu de loger un catalyseur d'oxydation 46 entre le dispositif de suralimentation 44 et le piège à NOx. Cette ligne d'échappement peut aussi comporter un conduit en dérivation 48, dit conduit EGR (Exhaust Gas Recirculation), contrôlé par une vanne 50, dénommée vanne EGR, permettant de faire recirculer une partie des gaz d'échappement vers les moyens d'admission 22. Avantageusement, un filtre à particules peut être logé dans cette ligne d'échappement en aval du piège et sera utilisé pour traiter les particules véhiculées par les gaz d'échappement.
Le moteur comprend des moyens de mesure et/ou d'évaluation de la richesse 52 des gaz d'échappement sortant des cylindres 12, ici sous la forme de sondes lambda qui sont disposées dans les tubulures d'échappement 32. Ces sondes permettent de connaître à tous moments la teneur en oxygène des gaz d'échappement et, par interpolation ou calcul, d'évaluer la richesse effective des gaz d'échappement issus de chaque cylindre. Ces sondes sont reliées par des conducteurs 54 à une unité de calcul et de commande 56. Cette unité est adaptée à contrôler les paramètres qui influencent la richesse des gaz d'échappement, tels que la quantité de carburant injectée dans cette chambre par les injecteurs 18 ainsi que le moment d'injection dans le cycle habituel de combustion du moteur et/ou la position de la vanne EGR 50 associée à l'ouverture/fermeture des moyens d'admission 22 permettant de quantifier le volume de gaz d'échappement réintroduit dans la chambre de combustion et/ou la quantité d'air frais (suralimenté ou non) admis dans la chambre 14 par ces moyens d'admissions 22. Pour cela, l'unité 56 est reliée par des lignes de commandes 58 aux différents organes de commandes (non représentés) des injecteurs 18, des arbres à cames 34, 36 et de la vanne 50. Cette unité est également reliée au moteur par une ligne de communication 60 pour connaître à tout instant les informations liées au fonctionnement du moteur, comme par exemple le régime moteur.
Cette unité de contrôle comprend aussi des modèles lui permettant d'évaluer le taux de saturation du piège à NOx en fonction de certains paramètres, tels que la composition du carburant et la durée de fonctionnement du moteur. De plus, l'unité comprend des tables de données contenant des valeurs seuils du taux de saturation à partir desquels les opérations de purge du piège doivent être entreprises. Alternativement aux modèles évaluant le taux de saturation, il peut être prévu une sonde à NOx (non représentée) disposée en aval du piège 42 et qui sera également reliée par une ligne à cette unité de contrôle. Cette sonde à NOx permettra de connaître à tous moments le taux de NOx présents dans les gaz d'échappement sortant de ce piège.
En fonctionnement, l'unité 56 connaît à tous moments le taux de saturation du piège à NOx 42. Dès que le taux de saturation de ce piège a atteint une valeur seuil contenue dans les tables de données de l'unité, les opérations de purge de ce piège sont lancées.
Pour ce faire, la richesse des gaz est augmentée, usuellement jusqu'à une richesse souhaitée d'environ 1,02, généralement par une post-injection de carburant, soit pendant la phase de détente du moteur, soit pendant sa phase d'échappement. Cette post-injection a pour effet d'élever la température des gaz d'échappement (environ 600°C) avec une composition réductrice dans la ligne d'échappement en amont du piège à NOx.
Pendant ces opérations de purge du piège, la richesse des gaz d'échappement circulant dans les tubulures d'échappement 32 est en permanence contrôlée par l'unité 56 grâce aux sondes 52 de façon à obtenir dans la ligne d'échappement en amont du catalyseur, la richesse souhaitée d'environ 1,02. Pour cela, sur un cycle de combustion, les sondes 52 mesurent la richesse des gaz d'échappement circulant dans les tubulures d'échappement de chaque cylindre. En cas de dérive de richesses effectives mesurées par ces sondes par rapport à la richesse souhaitée dans la ligne d'échappement en amont du piège 42, cette unité envoie, durant le cycle de combustion suivant, des commandes par les lignes 58 aux organes de commandes des injecteurs 18 pour modifier les paramètres (moment d'injection, quantité de carburant injecté,...) de la post-injection de carburant dans les chambres de combustion 14 des cylindres de manière conséquente pour obtenir le niveau de richesse souhaitée pour les gaz d'échappement. Cela permet d'obtenir un niveau de richesse supérieure à 1 sensiblement identique dans chaque cylindre et par conséquent d'obtenir la richesse souhaitée dans les gaz d'échappement traversant le piège. Bien entendu et cela sans sortir du cadre de l'invention, l'unité 56 peut agir, séparément ou en combinaison, sur les organes de commande des arbres à cames 34, 36 et/ou de la vanne EGR 50 pour contrôler l'admission d'air frais et/ou d'EGR dans les chambres de combustion. Durant le cycle de combustion suivant, la richesse des gaz d'échappement de chaque cylindre est à nouveau mesurée par les sondes 52 et dans le cas où les richesses mesurées correspondent à celles souhaitées pour les gaz d'échappement, les paramètres ayant permis d'obtenir cette richesse sont maintenus pendant les cycles de combustion suivants jusqu'à obtenir la purge complète du piège à NOx.
Grâce à cela, les gaz d'échappement sont constamment à la richesse voulue et la purge du piège à NOx se réalise en économisant du carburant et dans un délai plus rapide. De plus, l'efficacité du piège à NOx est grandement améliorée, de l'ordre de 8% dans le cas où le moteur possède un déséquilibre de richesse de 10% comme mentionné plus haut.

Sans sortir du cadre de l'invention, il peut être prévu que le catalyseur d'oxydation 46 soit utilisé pour diminuer la concentration en oxygène des gaz d'échappement et contribuer à l'augmentation de température de ces gaz. En effet, de grandes quantités d'hydrocarbures imbrûlés (HC) et d'oxyde de carbone (CO) sont émises à l'échappement et la conversion catalytique des HC et CO sur le catalyseur 46 permet de consommer en grande partie l'oxygène contenu dans les gaz d'échappement. Ainsi, la diminution de la concentration en oxygène s'effectue plus facilement sans avoir à augmenter de façon considérable la consommation de carburant.

On se reporte maintenant à la figure 2 qui montre un exemple de réalisation non couvert par l'invention et qui comporte les mêmes références que la figure 1.

Cette exemple se distingue de l'exemple de la figure 1 par le fait qu'il n'est prévu qu'une seule et unique sonde 52 pour évaluer la richesse des gaz d'échappement issus de chaque cylindre.

Plus précisément, la sonde 52 est placée sur la ligne d'échappement 38 en amont du piège à NOx 42, de préférence en aval du turbocompresseur 44, et est reliée par une ligne 54 à l'unité de calcul et de commande 56.

Ainsi, en fonctionnement, il sera utilisé le procédé d'estimation de la richesse d'un mélange, tel que celui décrit dans la demande de brevet français N°2834314.

Pour l'essentiel, ce procédé consiste à utiliser une sonde lambda unique et un estimateur de Kalman mettant en oeuvre une équation d'état et une équation de mesure. L'équation d'état prend en compte un vecteur de commande dont chaque composante est représentée par le rapport de la masse d'air admise dans le cylindre et de la quantité de carburant injectée dans ce cylindre. A partir de cela, la richesse du mélange carburé est reconstituée cylindre par cylindre.

Ainsi comme précédemment décrit en relation avec la figure 1, lors des opérations de purge du piège, toute dérive de la richesse effective estimée et/ou calculée cylindre par cylindre par rapport à la richesse souhaitée est corrigée par l'unité de calcul et de commande 56.
Ces corrections seront réalisées par une modification des paramètres de la post-injection de carburant ou par les moyens également décrits en relation avec la figure 1.

Additionnellement au contrôle de la richesse décrit précédemment, le moteur 10 peut être associé à un procédé de contrôle de la stabilité de combustion du mélange carburé dans chacun des cylindres 12. Ceci permet, outre la réduction de consommation générée par le contrôle de la richesse, de réduire le niveau de fumées émises par le moteur, d'une part, et le bruit de combustion (de 5 à 10dB) engendrés lors du passage avec un mélange riche.
Pour ce faire, ce procédé prévoit de réaliser un ajustement différentié de l'avance à l'injection de carburant dans chacun des cylindres.
Pour accomplir ces ajustements, le moteur comprend un capteur de pression 62 logé dans chaque chambre de combustion 14 et qui permet de communiquer à l'unité 56 par une ligne 64 la valeur de la PMI (Pression Moyenne Indiquée) de chaque cylindre.
Ainsi, pendant le fonctionnement du moteur et durant la phase de purge du piège à NOx 42, la PMI de chaque cylindre est mesurée par les capteurs 62. En cas d'écart par rapport à la PMI nominale, l'unité 56 envoie des instructions de commande aux organes de commandes des injecteurs 18 pour procéder à une correction des degrés d'avance à l'injection et ainsi permettre d'avancer ou de retarder le début de l'injection de carburant dans la chambre de combustion du cylindre.

Un autre moyen pour mesurer la stabilité de combustion consiste à utiliser l'information angulaire délivrée par une cible 66 placée sur le volant moteur 68 et dont le déplacement est mesuré par un lecteur 70 placé sur le moteur et envoyant des signaux par une ligne 72 à l'unité 56 à chaque passage de cette cible devant le lecteur.
Ainsi durant le fonctionnement du moteur, le dégagement d'énergie de chaque cylindre sera calculé à partir de l'accélération angulaire du volant mesurée par le lecteur 70 lors du déplacement de la cible 66.
Bien entendu, le procédé de contrôle de la stabilité de combustion utilisant soit des capteurs de pressions soit une cible angulaire placée sur le volant moteur comme décrit en relation avec la figure 2 peut être également appliqué sur l'exemple de réalisation de la figure 1.

## Revendications

1. Procédé pour purger un catalyseur (42) de traitement des oxydes nitriques (NOx), dit piège à NOx, placé dans une ligne d'échappement (38) d'un moteur (10) multicylindres (12), notamment de type Diesel, et dans lequel se sont accumulés des oxydes nitriques (NOx), procédé dans lequel on génère des gaz d'échappement avec une richesse souhaitée supérieure à 1 dans ladite ligne d'échappement en amont dudit catalyseur et on fait traverser ce catalyseur par ces gaz pour réduire et déstocker les oxydes nitriques dudit catalyseur, **caractérisé en ce qu'**il consiste à :
- évaluer la richesse effective des gaz d'échappement issus de chaque cylindre (12) par une mesure de ladite richesse ;
- en cas de dérive par rapport à la richesse souhaitée dans la ligne d'échappement (38), ajuster la richesse effective des gaz d'échappement issus de chaque cylindre (12) à la richesse souhaitée dans ladite ligne d'échappement.

2. Procédé selon la revendication 1, **caractérisé en ce qu'**on ajuste la richesse effective des gaz d'échappement de chaque cylindre à la richesse souhaitée dans la ligne d'échappement par une post-injection de carburant.

3. Procédé selon la revendication 1, **caractérisé en ce qu'**on ajuste la richesse effective des gaz d'échappement de chaque cylindre à la richesse souhaitée dans la ligne d'échappement par une recirculation contrôlée de gaz d'échappement pour chaque cylindre.

4. Procédé selon l'une des revendications précédentes, **caractérisé en ce que** la richesse souhaitée est de 1,01 à 1,10, préférentiellement de 1,02.

5. Procédé selon la revendication 1, **caractérisé en ce que**, en outre, on surveille la stabilité de combustion dans chaque cylindre (12) et, en cas d'écart par rapport à une valeur nominale, on ajuste cette stabilité à la valeur nominale.

6. Procédé selon la revendication 5, **caractérisé en ce qu'**on surveille la stabilité de combustion dans chaque cylindre (12) en mesurant la pression régnant dans le cylindre.

7. Procédé selon la revendication 5, **caractérisé en ce qu'**on surveille la stabilité de combustion dans chaque cylindre par l'information angulaire délivrée par une cible (66) asservie à la rotation du moteur (10).

8. Procédé selon l'une des revendications 5 à 7, **caractérisé en ce qu'**on équilibre la stabilité de combustion au moyen de l'avance à l'injection de carburant.

## Claims

1. A method for purging a catalyst (42) for processing nitric oxides (NOx), referred to as a NOx trap, placed in an exhaust line (38) of a multicylinder (12) engine (10), particularly of the Diesel type, and in which nitric oxides (NOx) have accumulated, wherein exhaust gases with a desired richness greater than 1 are generated in said exhaust line upstream of said catalyst and these gases are made to cross this catalyst in order to reduce and reclaim the nitric oxides from said catalyst, **characterised in that** it consists in:
- evaluating the actual richness of the exhaust gases exiting each cylinder (12) by measuring said richness;
- if this deviates from the richness desired in the exhaust line (38), adjusting the actual richness of the exhaust gases exiting each cylinder (12) to the richness desired in said exhaust line.

2. The method according to claim 1, **characterised in that** the actual richness of the exhaust gases from each cylinder is adjusted to the richness desired in the exhaust line by means of a post-injection of fuel.

3. The method according to claim 1, **characterised in that** the actual richness of the exhaust gases from each cylinder is adjusted to the richness desired in the exhaust line by means of a controlled recirculation of exhaust gas for each cylinder.

4. The method according to one of the preceding claims, **characterised in that** the desired richness is from 1.01 to 1.10, preferably 1.02.

5. The method according to claim 1, further **characterised in that** the combustion stability in each cylinder (12) is monitored and, in the event of a departure from a nominal value, this stability is adjusted to the nominal value.

6. The method according to claim 5, **characterised in that** the combustion stability in each cylinder (12) is monitored by measuring the pressure which prevails in the cylinder.

7. The method according to claim 5, **characterised in that** the combustion stability in each cylinder is monitored by the angular information provided by a target (66) which is slaved to the rotation of the engine (10).

8. The method according to one of claims 5 to 7, **characterised in that** the combustion stability is balanced by means of fuel injection advance.

## Patentansprüche

1. Verfahren zum Regenerieren eines Katalysators (42) zur Behandlung von Stickoxiden (NOx), NOx-Speicher genannt, der in einer Abgasleitung (38) eines Motors (10) mit mehreren Zylindern (12), insbesondere vom Dieseltyp, angeordnet ist, und in dem sich Stickoxide (NOx) akkumuliert haben, wobei in dem Verfahren Abgase mit einem gewünschten Lambdawert größer als 1 in der Abgasleitung stromaufwärts des Katalysators erzeugt werden und diese Gase durch diesen Katalysator geschickt werden, um die Stickoxide des Katalysators zu reduzieren und abzubauen, **dadurch gekennzeichnet, dass** es darin besteht:
- den tatsächlichen Lambdawert der Abgase aus jedem Zylinder (12) durch eine Messung des Lambdawerts zu ermitteln;
- im Fall einer Abweichung bezogen auf den gewünschten Lambdawert in der Abgasleitung (38), Einstellen des tatsächlichen Lambdawerts der Abgase aus jedem Zylinder (12) auf den gewünschten Lambdawert in der Abgasleitung.

2. Verfahren nach Anspruch 1, **dadurch gekennzeichnet, dass** der tatsächliche Lambdawert der Abgase jedes Zylinders an den gewünschten Lambdawert in der Abgasleitung durch eine Nachinjektion von Treibstoff eingestellt wird.

3. Verfahren nach Anspruch 1, **dadurch gekennzeichnet, dass** der tatsächliche Lambdawert der Abgase jedes Zylinders auf den gewünschten Lambdawert in der Abgasleitung durch eine kontrollierte Abgasrezirkulation für jeden Zylinder eingestellt wird.

4. Verfahren nach einem der vorhergehenden Ansprüche, **dadurch gekennzeichnet, dass** der gewünschte Lambdawert 1,01 bis 1,10, bevorzugt 1,02 beträgt.

5. Verfahren nach Anspruch 1, **dadurch gekennzeichnet, dass** ferner die Verbrennungsstabilität in jedem Zylinder (12) überwacht wird und, im Fall eines Unterschieds bezogen auf einen Nominalwert, diese Stabilität auf den Nominalwert eingestellt wird.

6. Verfahren nach Anspruch 5, **dadurch gekennzeichnet, dass** die Verbrennungsstabilität in jedem Zylinder (12) überwacht wird, indem der Druck gemessen wird, der in dem Zylinder herrscht.

7. Verfahren nach Anspruch 5, **dadurch gekennzeichnet, dass** die Verbrennungsstabilität in jedem Zylinder durch die Winkelinformation überwacht wird, die von einem Target (66) geliefert wird, das von der Motorrotation (10) abhängig ist.

8. Verfahren nach einem der Ansprüche 5 bis 7, **dadurch gekennzeichnet, dass** die Verbrennungsstabilität mittels des Kraftstoff-Spritzverstellers ausgeglichen wird.
